# EUROPEAN PATENT SPECIFICATION

(11) **EP 2 192 520 B1**
(45) Date of publication and mention of the grant of the patent: **16.03.2016**
(21) Application number: 08170407.4
(22) Date of filing: 01.12.2008
(51) Int. Cl.: G06F 21/32, G06F 21/31, G06F 21/40, G06F 21/77, G06F 21/34

(54) **Simplified Multi-Factor Authentication**
Vereinfachte Authentifizierung mit mehreren Faktoren
Authentification multi-facteurs simplifiée

(43) Date of publication of application: 02.06.2010
(60) Divisional application: 13152648.5
(73) Proprietor: BlackBerry Limited, Waterloo, ON N2K 0A7 (CA)
(72) Inventor: Adams, Neil P., Waterloo Ontario N2L 5Z5 (CA); Sibley, Richard, Kitchener Ontario N2M 3Z7 (CA); Davis, Dinah Lea Marie, Waterloo Ontario N2L 5Z5 (CA); Singh, Ravi, Waterloo Ontario N2L 5Z5 (CA)
(74) Representative: Gill Jennings & Every LLP

(56) References cited:
- WO-A-99/26372
- WO-A-02/078249
- WO-A-2006/102625
- US-A1- 2006 226 951
- US-A1- 2007 014 407
- US-A1- 2007 040 017

## Description

The present application relates generally to device security and, more specifically, to providing for multi-factor authentication through the use of biometric information.

Before using a secure device, a user is often required to enter a character sequence known as a Personal Identification Number (PIN) to unlock the secure device. Some secure devices are produced without keypads on which a PIN may otherwise be entered. Accordingly, the user generally enters the PIN using a primary device (e.g., a mobile phone, a portable digital assistant, a personal computer) that is in communication with the secure device. Subsequent to a candidate PIN being entered on the primary device, the candidate PIN is transmitted between several different software and hardware components of the primary device. For example, the candidate PIN may be transmitted from a user interface (UI) component that has received the candidate PIN to an application that caused the UI component to be presented to the user. Furthermore, the UI component may transmit the candidate PIN to a kernel and the kernel may transmit the candidate PIN to the secure device via several more components. In some cases, the candidate PIN may be transmitted to the secure device as clear text; in other cases, the candidate PIN may be transmitted to the secure device in an encrypted form. An attacker, therefore, has multiple opportunities to intercept a transmission of the candidate PIN from component to component between the time at which the user enters the candidate PIN on the primary device and the time at which the candidate PIN is transmitted by the primary device to the secure device.

US 2006/226951 relates to a method and system which uses a biometric personal identity verification system to provide a fingerprint enabled wireless add-on for personal identification number accessible smartcards.

WO99/26372 relates to a method and apparatus for generating a cryptographic key using biometric data. A fingerprint is received, and features are extracted from the fingerprint.

### GENERAL

A reader element is associated with an identity verification element. The reader element may have a biometric input device and is configured, through enrollment of a biometric element to encrypt a character sequence associated with the identity verification element. In a verification phase subsequent to the enrollment, a user may be spared a step of providing the character sequence by, instead, providing the biometric element. Responsive to receiving the biometric element, the reader element may decrypt the character sequence and provide the character sequence to the identity verification element.

According to a first aspect described herein, there may be provided a computer implemented method of handling a factor of a multi-factor authentication sequence As claimed in claim 1.

According to a second aspect described herein, there may be provided a smart card reader as claimed in claim 11.

According to a third aspect described herein, there may be provided computer readable medium containing computer-executable instructions as claimed in claim 12.

The biometric candidate may comprise a candidate fingerprint.

The identity verification element may comprise a smart card and the character sequence may comprise a personal identification number associated with the smart card.

Proceeding with the multi-factor authentication sequence may comprise: extracting a biometric template from the identity verification element; determining that the biometric candidate matches the biometric template. The proceeding with the multi-factor authentication sequence may further comprise: receiving a random challenge from an associated device; transmitting said random challenge to said identity verification element; receiving a signed challenge from said identity verification element; and transmitting said signed challenge to said associated device.

In other aspects of the present application, an apparatus may be provided for carrying out this method and a computer readable medium is provided for adapting a processor to carry out this method.

Other aspects and features of the present disclosure will become apparent to those of ordinary skill in the art upon review of the following description of specific embodiments of the disclosure in conjunction with the accompanying figures.

### BRIEF DESCRIPTION OF THE DRAWINGS

Reference will now be made to the drawings, which show by way of example, embodiments of the present disclosure, and in which:
FIG. 1 illustrates an environment in which a smart card is illustrated along with a mobile communication device that communicates wirelessly with a smart card reader;
FIG. 2 schematically illustrates the mobile communication device of FIG. 1;
FIG. 3 schematically illustrates the smart card reader of FIG. 1;
FIG. 4 illustrates example steps in a method carried out by the mobile communication device of FIG. 1 in an enrollment phase;
FIG. 5A illustrates example steps in a method carried out by the smart card reader of FIG. 1 in the enrollment phase;
FIG. 5B illustrates further example steps in the method of FIG. 5A;
FIG. 6 illustrates example steps in a method carried out by the mobile communication device of FIG. 1 in a verification phase;
FIG. 7A illustrates example steps in a method carried out by the smart card reader of FIG. 1 in the verification phase; and
FIG. 7B illustrates further example steps in the method of FIG. 7A.

### DESCRIPTION OF PREFERRED EMBODIMENTS

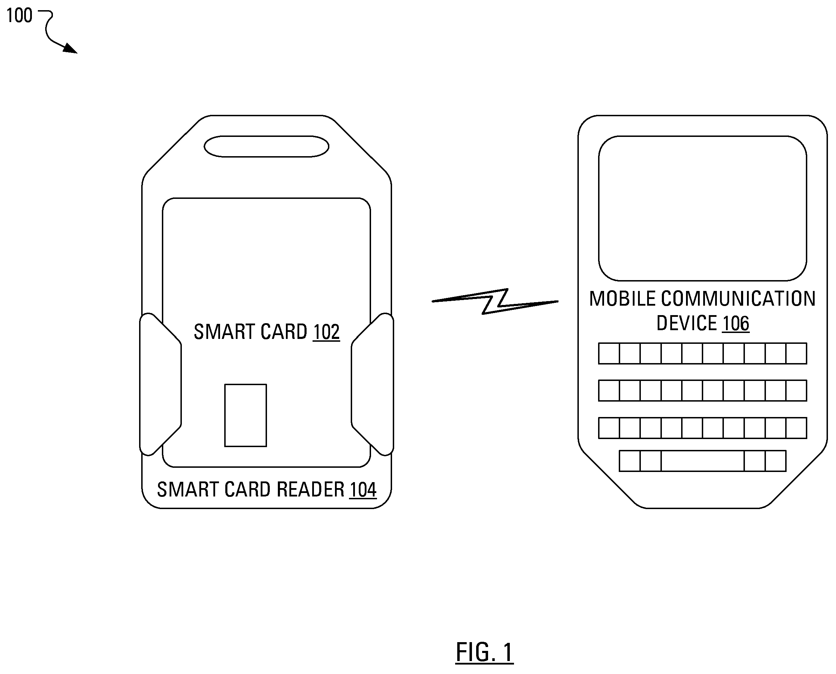

FIG. 1 illustrates an exemplary communication system 100 that includes a mobile communication device 106 that is enabled to communicate wirelessly with a peripheral device in the form of a smart card reader 104. A smart card 102 is illustrated mounted in the smart card reader 104. The smart card 102 may be considered to be an embodiment of an element that may, more generically, be known as an identity verification element.

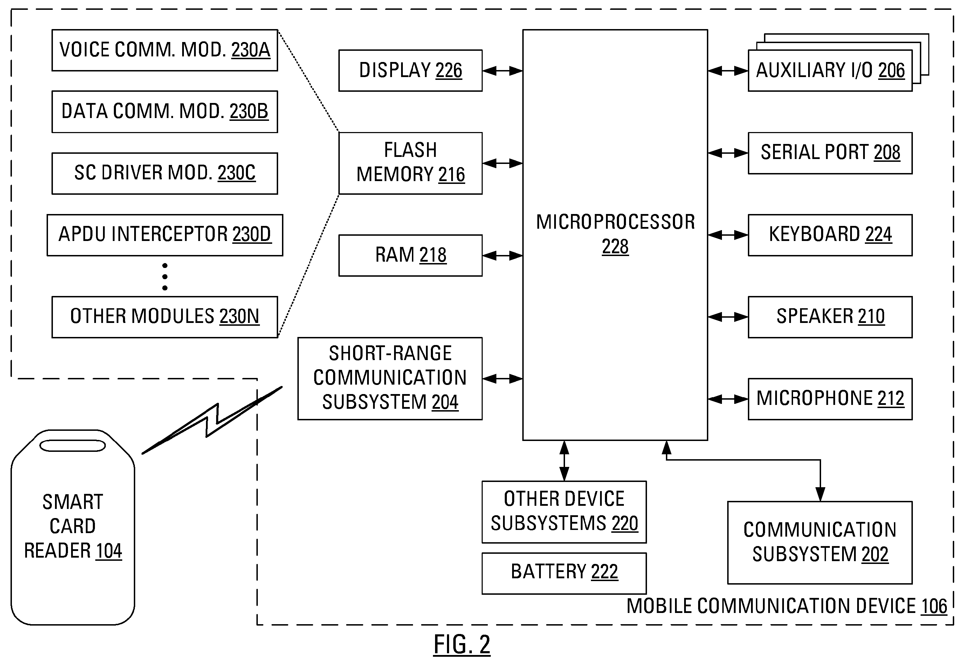

FIG. 2 illustrates the mobile communication device 106 including a housing, an input device (e.g., a keyboard 224 having a plurality of keys) and an output device (e.g., a display 226), which may be a full graphic, or full color, Liquid Crystal Display (LCD). In some embodiments, the display 226 may comprise a touchscreen display. In such embodiments, the keyboard 224 may comprise a virtual keyboard. Other types of output devices may alternatively be utilized. A processing device (a microprocessor 228) is shown schematically in FIG. 2 as coupled between the keyboard 224 and the display 226. The microprocessor 228 controls the operation of the display 226, as well as the overall operation of the mobile communication device 106, in part, responsive to actuation of the keys on the keyboard 224 by a user. Notably, the keyboard 224 may comprise physical buttons (keys) or, where the display 226 is a touchscreen device, the keyboard 224 may be implemented, at least in part, as "soft keys". Actuation of a so-called soft key involves either touching the display 226 where the soft key is displayed or actuating a physical button in proximity to an indication, on the display 226, of a temporary action associated with the physical button.

The housing may be elongated vertically, or may take on other sizes and shapes (including clamshell housing structures). Where the keyboard 224 includes keys that are associated with at least one alphabetic character and at least one numeric character, the keyboard 224 may include a mode selection key, or other hardware or software, for switching between alphabetic entry and numeric entry.

In addition to the microprocessor 228, other parts of the mobile communication device 106 are shown schematically in FIG. 2. These may include a communications subsystem 202, a short-range communications subsystem 204, the keyboard 224 and the display 226. The mobile communication device 106 may further include other input/output devices such as a set of auxiliary I/O devices 206, a serial port 208, a speaker 210 and a microphone 212. The mobile communication device 106 may further include memory devices including a flash memory 216 and a Random Access Memory (RAM) 218. Furthermore, the mobile communication device 106 may include various other device subsystems 220. The mobile communication device 106 may have a battery 222 to power the active elements of the mobile communication device 106. The mobile communication device 106 may, for instance, comprise a two-way radio frequency (RF) communication device having voice and data communication capabilities. In addition, the mobile communication device 106 may have the capability to communicate with other computer systems via the Internet.

Operating system software executed by the microprocessor 228 may be stored in a computer readable medium, such as the flash memory 216, but may be stored in other types of memory devices, such as a read only memory (ROM) or similar storage element. In addition, system software, specific device applications, or parts thereof, may be temporarily loaded into a volatile store, such as the RAM 218. Communication signals received by the mobile device may also be stored to the RAM 218.

The microprocessor 228, in addition to its operating system functions, enables execution of software applications on the mobile communication device 106. A predetermined set of software applications that control basic device operations, such as a voice communications module 230A and a data communications module 230B, may be installed on the mobile communication device 106 during manufacture. A smart card (SC) driver module 230C may also be installed on the mobile communication device 106 during manufacture. Furthermore, a command APDU interceptor 230D may also be installed on the mobile communication device 106 to implement aspects of the present disclosure. As well, additional software modules, illustrated as another software module 230N, which may be, for instance, a personal information manager (PIM) application, may be installed during manufacture. The PIM application may be capable of organizing and managing data items, such as e-mail messages, calendar events, voice mail messages, appointments, and task items. The PIM application may also be capable of sending and receiving data items via a wireless carrier network. The data items managed by the PIM application may be seamlessly integrated, synchronized and updated via the wireless carrier network with the device user's corresponding data items stored or associated with a host computer system.

Communication functions, including data and voice communications, may be performed through the communication subsystem 202 and through the short-range communications subsystem 204.

The short-range communications subsystem 204 enables communication between the mobile communication device 106 and other proximate systems or devices, which need not necessarily be similar devices. For example, the short-range communications subsystem 204 may include a Bluetooth™ communication module to provide for communication with the smart card reader 104 where the smart card reader also implements a Bluetooth™ communication module. As another example, the short-range communications subsystem 204 may include an infrared device to provide for communication with similarly-enabled systems and devices.

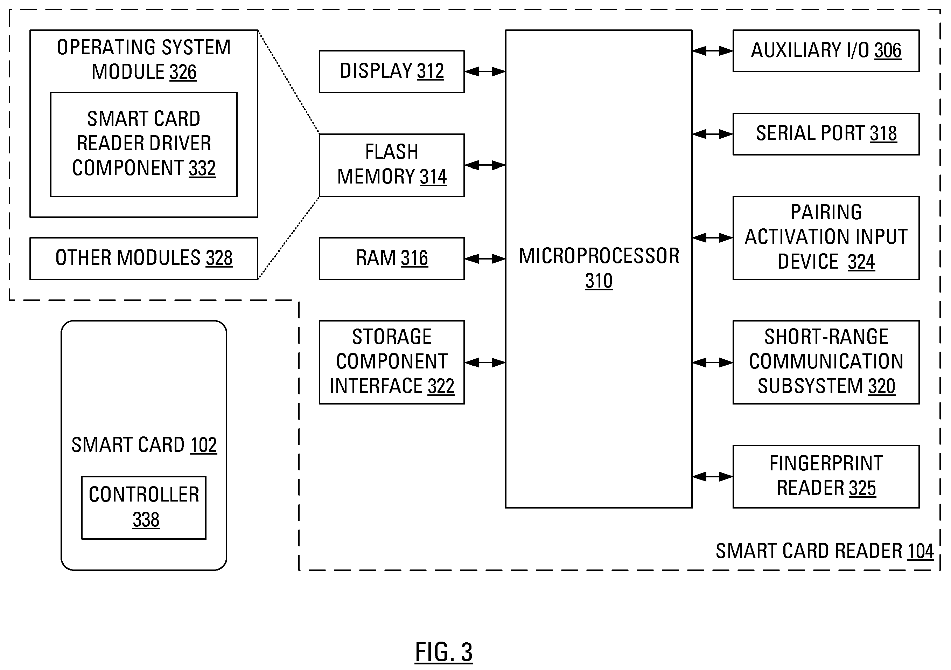

FIG. 3 illustrates an example embodiment of the smart card reader 104. The smart card reader 104 includes a controller including at least one smart card reader microprocessor 310, which is suitably programmed to control the overall operation and functions of the smart card reader 104. The smart card reader 104 may also include an output device (e.g., a display module 312). The smart card reader 104 may further include peripheral devices or subsystems such as a flash memory 314, a RAM 316, a serial port 318 (e.g., a Universal Serial Bus, or "USB", port), a smart card reader short-range communications subsystem 320 (e.g., an infrared transceiver, wireless bus protocol system using a protocol such as a Bluetooth™), a storage component interface 322 (e.g., for a memory card or any other data storage device), a pairing-activation input device 324 (e.g., a push button) and a biometric information input device 325 (e.g., a fingerprint sensor). In some embodiments, the RAM 316 includes a portion allocated to a data cache.

The smart card reader microprocessor 310 operates under stored program control with code or firmware being stored in the flash memory 314 (or other type of non-volatile memory device or devices). As depicted in FIG. 3, the stored programs (e.g., firmware) include an operating system program or code module 326 and other programs or software application modules indicated generally by reference 328. The operating system module 326 of the smart card reader 104 further includes a smart card reader driver component 332.

The smart card reader driver component 332 is responsible for coordinating communications between the smart card reader 104 and the smart card 102 and/or the smart card driver module 230C of the mobile communication device 106. Based on results of various communications with the smart card reader 104, the smart card driver module 230C maintains a record of the state of the smart card 102. The operating system module code 326, code for specific device application modules 328, code for the smart card reader driver component 332, or code components thereof, may be temporarily loaded into a volatile storage medium such as the RAM 316. Received communication signals and other data may also be stored in the RAM 316. Additionally, the storage component interface 322 receives the smart card 102, which may provide additional storage space for the smart card reader 104.

In one embodiment, the smart card 102 has a controller 338 responsible for coordinating communications between the smart card 102 and the smart card reader driver component 332 of the smart card reader 104.

The stored program control (i.e., software application modules 328) for the smart card reader microprocessor 310 may include a predetermined set of applications, code components or software modules that control basic device operations, for example, management and security related control of the data of the smart card reader 104, and may be installed on the smart card reader 104 as a component of the software application modules 328 during the manufacturing process. Further applications may also be loaded (i.e., downloaded) onto the smart card reader 104 through the operation of the serial port 318, the smart card reader short-range communications subsystem 320 or from the smart card 102. The downloaded code modules or components may then be installed by the user (or automatically) in the RAM 316 or non-volatile program memory (e.g., the flash memory 314).

While the smart card reader driver component 332 is shown to be an integrated portion of the operating system 326 for security purposes (e.g., individuals are not permitted to tamper with the smart card reader driver component 332), the smart card reader driver component 332 may be installed as one of the software applications 328, so long as suitable security related precautions are taken to ensure that the smart card reader driver component 332 cannot be modified or tampered with by unauthorized users.

The serial port 318 may be a USB-type interface port for interfacing or synchronizing with another device, such as a personal computer or the mobile communication device 106. The serial port 318 is used to set preferences through an external device or software application or exchange data with a device, such as the mobile communication device 106. Such data may be stored on the smart card 120 that is plugged into the storage component interface 322 of the smart card reader 104. The serial port 318 is also used to extend the capabilities of the smart card reader 104 by providing for downloads, to the smart card reader 104, of information or software, including user interface information.

The short-range communications subsystem 320 provides an interface for communication between the mobile communication device 106 or personal computer and the smart card reader 104. In one embodiment, the short-range communications subsystem 320 employs an infrared communication link or channel. In another embodiment, the short-range communications subsystem 320 operates according to a wireless RF bus protocol, such as Bluetooth™. However, the short-range communications subsystem 320 may operate according to any suitable local wired or wireless communication protocol, so long as the short-range communications subsystem 204 (FIG. 2) of the mobile communication device 106 operates using the same protocol, thereby facilitating wireless communication between the mobile communication device 106 and the smart card reader 104. Any communications mechanism and/or protocol may be implemented for the short-range communications subsystems 204, 320, so long as the mobile communication device 106 can communicate with the smart card reader 104 when the mobile communication device 106 is no more than a predetermined distance away from the smart card reader 104.

In one embodiment, the smart card 102 may be compliant with a Federal Information Processing Standards Publication (FIPS) standard. For example, FIPS 201 is a United States federal government standard that specifies Personal Identity Verification (PIV) requirements for Federal employees and contractors. It is forecast that Personal Identity Verification (PIV) Cards will be deployed to all US government employees (in the millions) over the next few years.

PIV cards store biometric templates (e.g., fingerprint templates). Access to the biometric templates on a given PIV card (i.e., a smart card) is protected by a PIN. A PIV card PIN is typically a sequence eight characters in length, with only digits 0, 1, 2, 3, 4, 5, 6, 7, 8 and 9 being valid characters. In other embodiments, the PIN may comprise a sequence of any plural number of characters.

Often, before the smart card 102 can be used, the user of the smart card is required to be authenticated as having permission to use the smart card 102 or to extract some data stored on the smart card 102. One manner in which such permission is determined is through an association of a PIN with the smart card 102. When the smart card 102 is assigned to a user, the smart card PIN is revealed to the user. Then, before the user can use the smart card 102, the user is required to provide the PIN for verification by the smart card 102.

Typically, in the situation illustrated in FIG. 1 wherein the smart card 102 is received within the smart card reader 104 and the smart card reader 104 is in communication (wired or wireless) with the mobile communication device 106, user authentication is accomplished via a user authentication application executed on the mobile communication device 106.

The smart card 102 may, for example, store a private cryptographic key that is to only be associated with the user. In a situation wherein the user requires use of the private cryptographic key that is stored on the smart card 102, use of the private cryptographic key may be gained after the PIN associated with the smart card 102 has been correctly provided. Access to the mobile communication device 106 may be gained by satisfying a three factor authentication process. In one example, the three factors include: "Something the user is", e.g., the user's fingerprint; "Something the user has", e.g., the smart card 102; and "Something the user knows", e.g., the PIN associated with the smart card 102.

While using the mobile communication device 106, the user may elect to electronically sign a recently composed e-mail message before sending the message. The user may interact with a message composition user interface (UI) to indicate a desire to electronically sign the message. Responsive to the user's so indicating, the microprocessor 228 of the mobile communication device 106 may generate a hash of the message and arrange for transmission of the hash, along with a request for an electronic signature, to the smart card reader 104. Responsive to receiving the signature request, the smart card 102 may generate a request for the smart card PIN. The PIN request may be sent by the smart card reader 104 to the mobile communication device 106.

Upon receipt of the PIN request, the user authentication application controls presentation of a Ul to the user on the display 226 of the mobile communication device 106 and the user employs the keyboard 224 to provide a candidate PIN to the mobile communication device 106. The mobile communication device 106 communicates the candidate PIN to the smart card reader 104. The smart card reader 104 communicates the candidate PIN to the smart card 102.

If the smart card 102 determines that the candidate PIN is correct, the smart card 102 may generate an electronic signature from the hash received in the signature request and transmit the electronic signature to the smart card reader 104, which transmits the electronic signature to the mobile communication device 106 for transmission in conjunction with transmission of the message.

If the smart card 102 determines that the candidate PIN is incorrect, the smart card 102 may indicate authentication failure to the smart card reader 104. The smart card reader 104 may then communicate an indication of authentication failure to the mobile communication device 106. The mobile communication device 106 may then indicate authentication failure to the user via the application UI. The smart card reader 104 may also provide an indication of authentication failure directly to the user on the display module 312 of the smart card reader 104.

In the scenario presented above, subsequent to a candidate PIN being entered by the user on the keyboard 224 of the mobile communication device 106, the candidate PIN may be transmitted between several different software and hardware components of the mobile communication device 106. For example, the candidate PIN may be transmitted from a UI component that has received the candidate PIN to the application that caused the UI component to be presented to the user. Furthermore, the UI component may transmit the candidate PIN to a kernel, and the kernel may transmit the candidate PIN to the smart card reader 104 via several more components. In some cases, the candidate PIN may be transmitted, by the mobile communication device 106, to the smart card reader 104 as clear text; in other cases, the candidate PIN may be transmitted, by the mobile communication device 106, to the smart card reader 104 in an encrypted form. An attacker, therefore, has multiple opportunities to intercept a transmission of the candidate PIN from component to component between the time at which the user enters the candidate PIN on the mobile communication device 106 and the time at which the candidate PIN is transmitted by the smart card reader 104 to the smart card 102.

In overview, the smart card reader 104 may be configured to store an encrypted version of the PIN associated with the smart card 102. The user may then use a fingerprint entry to trigger the smart card reader 104 to decrypt the smart card PIN and transmit the PIN to the smart card 102. Since a candidate PIN is not entered on the mobile communication device 106 by the hand of the user and the candidate PIN is not transmitted to the smart card reader 104 at the time of unlocking the smart card 102, the number of opportunities for an attacker to intercept transmission of the candidate PIN is significantly reduced.

In connection with setting up or configuring Multi-Factor Authentication, the user may interact with a menu UI on the mobile communication device 106 to indicate a desire to use "Simplified Three Factor Authentication", thereby causing the microprocessor 228 of the mobile communication device 106 to execute an authentication application.

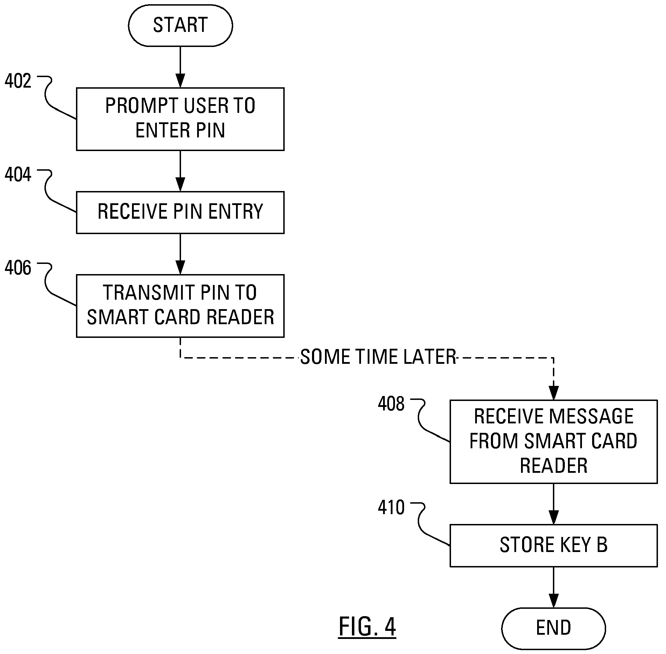

In operation, in an enrollment phase illustrated in FIG. 4, the authentication application executed on the mobile communication device 106 prompts (step 402) the user to enter the smart card PIN. Responsively, the user may enter the smart card PIN using the keyboard 224 of the mobile communication device 106. Accordingly, the authentication application receives (step 404) the smart card PIN and transmits (step 406) the smart card PIN to the smart card reader 104.

Alternatively, and for increased security, the user may elect to use biometric PIN entry to enter the smart card PIN directly on the smart card reader 104. Biometric PIN entry is a scheme that involves a predetermined assignment of characters to biometric templates so that the user can enter a character sequence on the smart card reader 104 by providing a sequence of biometric inputs to biometric input device.

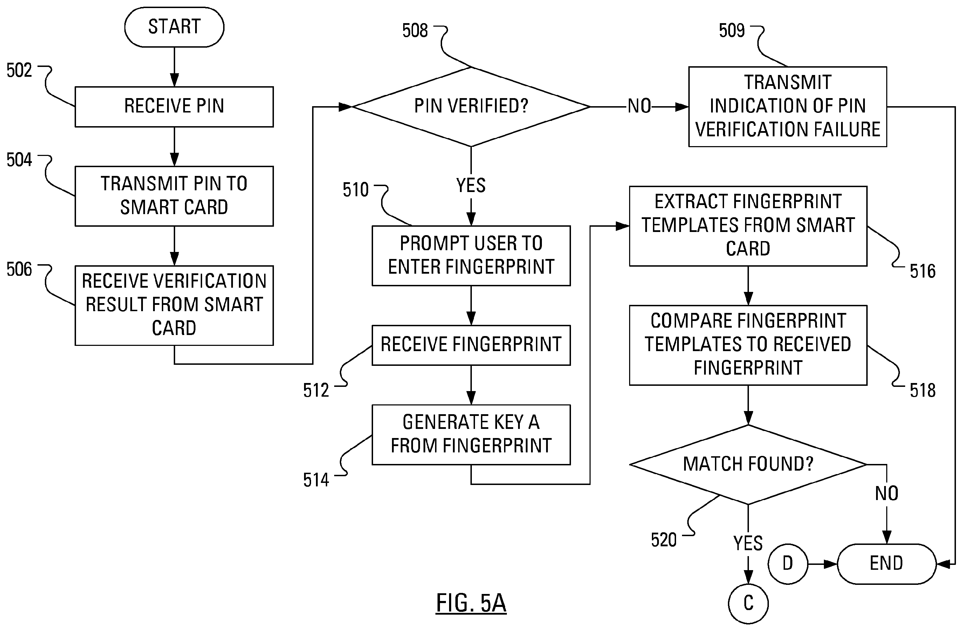

The smart card reader 104 receives (step 502, FIG. 5A) the smart card PIN, for example, from the mobile communication device 106 or, for another example, directly from the fingerprint reader 325. Responsive to receiving the smart card PIN, the smart card reader 104 may transmit (step 504) the smart card PIN to the smart card 102 for verification and, subsequently, may receive (step 506) an indication of the verification result. Upon determining (step 508) that the smart card PIN has been successfully verified by the smart card 102, the smart card reader 104 prompts (step 510) the user to provide a biometric entry. The biometric entry may be provided by, for example, swiping a finger across the fingerprint reader 325. The smart card reader 104, upon receiving (step 512), in one embodiment, a fingerprint entered by the user, generates (step 514) a private key based on the user's fingerprint - this private key may be referred to as "key A".

Upon determining (step 508) that the smart card PIN has not been verified by the smart card 102, the smart card reader 104 may transmit (step 509) an indication of PIN verification failure to the mobile communication device 106. The smart card reader 104 may also directly indicate to the user PIN verification failure on the display module 312 of the smart card reader 104. Consequently, the enrollment procedure may be considered unsuccessful and complete. Alternatively, the user may be asked to re-enter the PIN to try again.

In addition to generating (step 514) a private key based on the user's fingerprint, the smart card reader 104 may also extract (step 516) the biometric fingerprint templates stored on the smart card 102 and compare (step 518) the fingerprint templates extracted from the smart card 102 to the user fingerprint received in step 512.

Alternatively, the smart card reader 104 may transmit the user fingerprint received in step 512 to the smart card 102 and it may be left to the smart card 102 to determine whether the user fingerprint is a match for one of the fingerprint templates stored on the smart card 102.

In either case, if the user fingerprint is determined (step 520) to be a match for one of the fingerprint templates, the enrollment procedure may continue. If the user fingerprint is determined (step 520) not to be a match for one of the fingerprint templates, the enrollment procedure may be considered unsuccessful and complete. Alternatively, the user may be asked to re-enter the fingerprint to try again.

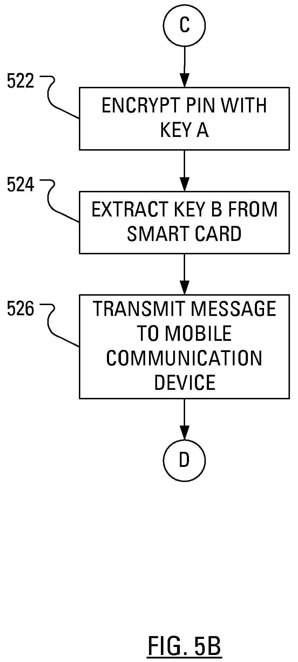

As the enrollment procedure continues, the smart card reader 104 encrypts (step 522, see FIG. 5B) the smart card PIN with key A. The smart card reader 104 may then extract (step 524) a public key from the smart card 102. The extracted public key corresponds to a private key on the smart card 102 - this public key may be referred to as "key B". The smart card reader 104 may then transmit (step 526) a message to the mobile communication device 106, where the message indicates: that the smart card PIN has been verified; that the user fingerprint matches a stored fingerprint template on the smart card 102; and a value for key B.

Responsive to receiving (step 408, FIG. 4) the message, the mobile communication device 106 stores (step 410) key B. Upon storage (step 410) of key B, the user may consider that the combination of the smart card reader 104 and the mobile communication device 106 is configured for use of simplified multi-factor authentication.

A verification phase may be initiated responsive to any one of many distinct triggers. An example trigger is a user indicating, through the use of the mobile communication device 106 UI, a desire to unlock the mobile communication device 106 for use.

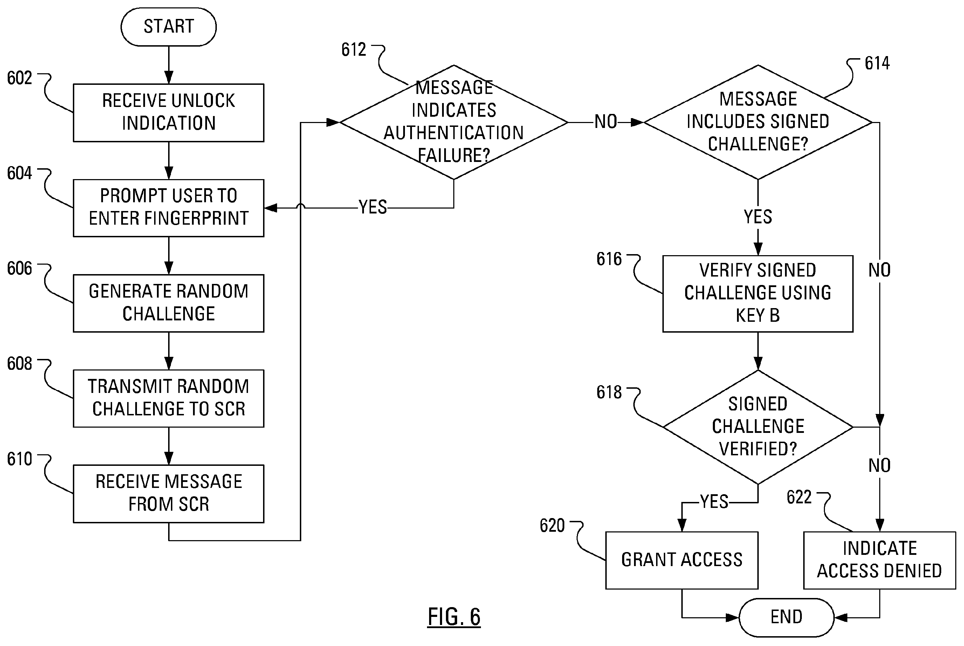

As the verification phase begins for example trigger, the mobile communication device 106 is in a locked state and the user interacts with a UI to indicate a desire to unlock the mobile communication device 106. Responsive to receiving (step 602, FIG. 6) the indication that the user wishes to unlock the mobile communication device 106, the authentication application executed by the microprocessor 228 on the mobile communication device 106 prompts (step 604) the user to provide a biometric entry, e.g., to enter a fingerprint, on the smart card reader 104. The authentication application then generates (step 606) a random challenge and transmits (step 608) the random challenge to the smart card reader 104.

Responsive to receiving (step 702) a fingerprint entered by the user at the fingerprint reader 325 of the smart card reader 104, and receiving (step 703) a random challenge from the mobile communication device 106, the smart card reader 104 generates (step 704) key A from the user-provided fingerprint. The smart card reader 104 decrypts (step 706) the smart card PIN using key A.

After decrypting (step 706) the smart card PIN, the smart card reader 104 determines (step 708) whether the decryption was successful by, for instance, transmitting the PIN to the smart card 102 and analyzing a response returned by the smart card 102. If the smart card reader 104 determines (step 708) that the PIN decryption was unsuccessful, the smart card reader 104 may transmit (step 710) an indication of PIN decryption failure to the mobile communication device 106. Responsive to receiving (step 610) a message from the smart card reader 104, the microprocessor 228 determines (step 610) whether the message indicates authentication failure. Upon determining (step 610) that the message indicates authentication failure, the authentication application may again prompt (step 604) the user to enter a fingerprint on the smart card reader 104. At the smart card reader 104, program control returns to step 702, wherein a user-provided fingerprint is again received.

If the smart card reader 104 determines (step 708) that the PIN decryption was successful, the smart card reader 104 may transmit (step 712) the smart card PIN to the smart card 102. Upon receiving (step 714) a verification indication from the smart card 102, the smart card reader 104 determines (step 716) whether the PIN verification was successful.

If the smart card reader 104 determines (step 716) that the PIN verification was unsuccessful, the smart card reader 104 may consider the verification phase as having failed or may transmit (step 718) an indication of PIN verification failure to the mobile communication device 106 and await a further fingerprint entry.

Responsive to receiving (step 610) a message from the smart card reader 104, the microprocessor 228 determines (step 612) whether the message indicates authentication failure. Upon determining (step 612) that the message indicates authentication failure, the authentication application may again prompt (step 604) the user to enter a fingerprint on the smart card reader 104. At the smart card reader 104, program control returns to step 702, wherein a user-provided fingerprint is again received.

If the smart card reader 104 determines (step 716) that the PIN verification was successful, the smart card reader 104 may extract (step 720) stored fingerprint templates from the smart card 102. Notably, access to the fingerprint templates stored on the smart card 102 is allowed only upon provision of a correct smart card PIN.

The smart card reader 104 may then compare (step 722) the fingerprint templates extracted from the smart card 102 to the user fingerprint received in step 702.

If the user fingerprint is determined (step 724) not to be a match for one of the fingerprint templates, the authentication is considered to be unsuccessful and complete. Since the PIN was entered correctly, a failure to match is unlikely. However, in such an unlikely event, it may be prudent to automatically "soft reset" the smart card 102 so that further access to the smart card 102 is not allowed. Otherwise, there is potential to expose private data.

If the user fingerprint is determined (step 724) to be a match for one of the fingerprint templates, the smart card reader 104 transmits (step 726) the random challenge, received from the mobile communication device 106 in step 703, to the smart card 102 along with a request to sign the random challenge.

Responsive to receiving the random challenge, the smart card 102 signs the random challenge, thereby generating a signed challenge, and provides the signed challenge to the smart card reader 104. The signing operation involves use of a private cryptographic key stored at the smart card 102. The private cryptographic key corresponds to the public cryptographic key, referred to herein as key B, extracted by the smart card reader 104 in step 524 (see FIG. 5B). Notably, access to the signing operation on the smart card 102 is allowed only upon provision of a correct smart card PIN, as performed in step 504.

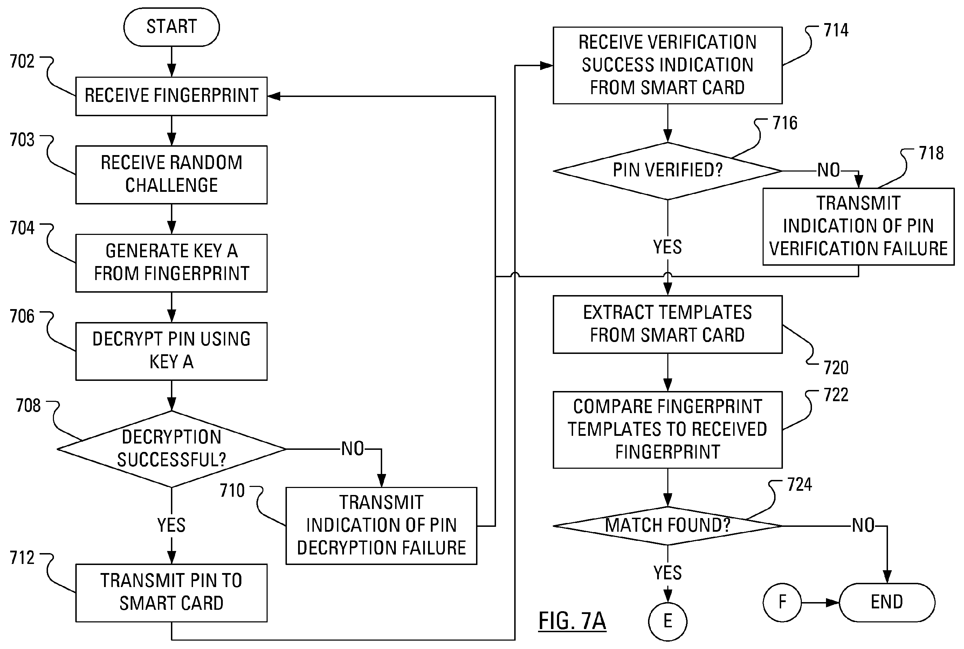

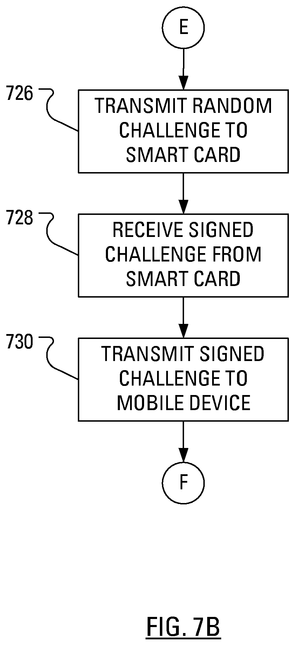

Upon receiving (step 728, see FIG. 7B) the signed challenge from the smart card 102, the smart card reader 104 transmits (step 730) a message to the mobile communication device 106, where the message includes the signed challenge. Upon transmitting (step 730) the signed-challenge message to the mobile communication device 106, the authentication is considered to be successful and complete.

Responsive to receiving (step 610) the signed-challenge message, determining (step 612) that the signed-challenge does not include an indication of authentication failure and determining (step 614) that the signed-challenge message includes the signed challenge, the microprocessor 228 of the mobile communication device 106 verifies (step 616) the signed challenge using key B. The microprocessor 228 then considers the outcome of the verification and determines (step 618) whether the verification was successful. Upon determining (step 618) that the verification was successful, the microprocessor 228 may grant (step 620) the user access to the mobile communication device 106.

Upon determining (step 618) that the verification was unsuccessful, the microprocessor 228 may indicate (step 622) that the user has been denied access to the mobile communication device 106. In either case, the verification phase may be considered to be complete.

Originally, for the example authentication scheme, the three factors included: "Something the user is", e.g., the user's fingerprint; "Something the user has", e.g., the smart card 102; and "Something the user knows", e.g., the PIN associated with the smart card 102. According to aspects of the present disclosure, through use of the enrollment phase, the user associates the "Something the user knows" factor with the "Something the user is" factor. Advantageously, in the verification phase, rather than three factors, the user may only supply two factors: the "Something the user is" factor, e.g., the user's fingerprint; and the "Something the user has" factor, e.g., the smart card 102.

While a fingerprint has been used as an example element of biometric data, other elements of biometric data may be used. Elements of biometric data include fingerprints, retinal scans, face geometry scans, hand geometry scans, voice or speech prints, etc.

The above-described embodiments of the present application are intended to be examples only. Alterations, modifications and variations may be effected to the particular embodiments by those skilled in the art. The scope of the invention is defined by the appended claims.

## Claims

1. A computer implemented method of handling a factor of a multi-factor authentication sequence, said method comprising:
receiving a biometric candidate at a device associated with an identity verification element (102), said device lacking access to biometric templates stored on the identity verification element (102) until extracted from said identity verification element (102);
generating a cryptographic key from said biometric candidate;
decrypting a previously stored, encrypted character sequence associated with said identity verification element (102), wherein said decrypting employs said cryptographic key and results in a decrypted character sequence;
transmitting said decrypted character sequence to said identity verification element;
receiving, from said identity verification element, an indication of character sequence verification;
determining, from said indication, that said identity verification element has verified said decrypted character sequence; and
responsive to said determining that said identity verification element has successfully verified said decrypted character sequence, proceeding with said multi-factor authentication sequence by:
extracting said biometric templates from said identity verification element; and
determining that said biometric candidate matches one of said biometric templates.

2. The method of claim 1, further comprising:
responsive to determining that said identity verification element has not verified said decrypted character sequence, transmitting an indication that verification was unsuccessful.

3. The method of any preceding claim wherein said biometric candidate comprises a candidate fingerprint.

4. The method of any preceding claim wherein said identity verification element comprises a smart card (102).

5. The method of claim 4 wherein said character sequence comprises a personal identification number associated with said smart card.

6. The method of claim 1 wherein said proceeding with said multi-factor authentication sequence further comprises:
receiving a random challenge from an associated device (106);
responsive to said determining that said biometric candidate matches one of said biometric templates:
transmitting said random challenge to said identity verification element;
receiving a signed challenge from said identity verification element; and
transmitting said signed challenge to said associated device.

7. The method of claim 6 further comprising:
at the associated device (106), verifying the signed challenge using a cryptographic key previously extracted from the smart card; and
responsive to successfully verifying the signed challenge, granting access to the associated device.

8. The method of any preceding claim, wherein receiving the biometric candidate triggers a verification phase, the method further comprising, in an enrollment phase, occurring before the verification phase:
receiving (512) an enrollment biometric candidate at the device (104) responsive to said receiving said enrollment biometric candidate;
generating (514) an enrollment cryptographic key from said enrollment biometric candidate;
receiving (502) a character sequence associated with said identity verification element (102);
encrypting (524) said character sequence, wherein said encrypting employs said first cryptographic key and results in the encrypted character sequence; and
storing said encrypted character sequence.

9. The method of claim 8, wherein decrypting the previously stored, encrypted character sequence comprises verifying that the character sequence has been successfully decrypted.

10. A smart card reader (104) associated with a smart card (102), said smart card reader (104) lacking access to a biometric template until received from said smart card (102) comprising:
a storage component interface (322) for receiving said smart card (102) for communication therewith;
a memory (314, 316) for storing an encrypted character sequence associated with said smart card and computer executable instructions;
a biometric input device (325); and
a processor (310) adapted to execute said computer executable instructions to cause said apparatus (104) to implement the steps of the method of any one of claims 1 to 9.

11. A computer readable medium (314, 316) containing computer-executable instructions that, when performed by a processor (310), cause said processor to perform the steps of the method of any one of claims 1 to 9.

## Patentansprüche

1. Computerimplementiertes Verfahren zum Handhaben eines Faktors einer Mehrfaktorenauthentifizierungsfolge, wobei das Verfahren Folgendes aufweist:
Empfangen eines biometrischen Kandidaten an einer Vorrichtung, die mit einem Identitätsverifizierungselement (102) verknüpft ist, wobei die Vorrichtung keinen Zugang zu biometrischen Vorlagen hat, die auf dem Identitätsverifizierungselement (102) gespeichert sind, bis sie von dem Identitätsverifizierungselement (102) extrahiert sind,
Erzeugen eines kryptografischen Schlüssels von dem biometrischen Kandidaten,
Entschlüsseln einer zuvor gespeicherten, verschlüsselten Zeichenfolge, die mit dem Identitätsverifizierungselement (102) verknüpft ist, wobei das Entschlüsseln den kryptografischen Schlüssel einsetzt und in einer entschlüsselten Zeichenfolge resultiert,
Senden der entschlüsselten Zeichenfolge an das Identitätsverifizierungselement,
Empfangen einer Angabe der Zeichenfolgenverifizierung von dem Identitätsverifizierungselement,
Bestimmen aus dieser Angabe, dass das Identitätsverifizierungselement die entschlüsselte Zeichenfolge verifiziert hat,
als Reaktion auf das Bestimmen, dass das Identitätsverifizierungselement die entschlüsselte Zeichenfolge erfolgreich verifiziert hat, Fortfahren mit der Mehrfaktorenauthentifizierungsfolge durch:
Extrahieren der biometrischen Vorlage von dem Identitätsverifizierungselement und
Bestimmen, dass der biometrische Kandidat mit einem der biometrischen Vorlagen übereinstimmt.

2. Verfahren nach Anspruch 1, ferner mit:
als Reaktion auf das Bestimmen, dass das Identitätsverifizierungselement die entschlüsselte Zeichenfolge nicht verifiziert hat, Senden einer Angabe, dass die Verifizierung erfolglos war.

3. Verfahren nach einem der vorhergehenden Ansprüche, wobei der biometrische Kandidat einen Kandidatenfingerabdruck aufweist.

4. Verfahren nach einem der vorhergehenden Ansprüche, wobei das Identitätsverifizierungselement eine Chipkarte (102) aufweist.

5. Verfahren nach Anspruch 4, wobei die Zeichenfolge eine persönliche Identifikationsnummer, PIN, aufweist, die mit der Chipkarte verknüpft ist.

6. Verfahren nach Anspruch 1, wobei das Fortfahren mit der Mehrfaktorenauthentifizierungsfolge ferner Folgendes aufweist:
Empfangen einer Zufallsaufgabe von einer verknüpften Vorrichtung (106),
als Reaktion auf das Bestimmen, dass der biometrische Kandidat mit einem der biometrischen Vorlagen übereinstimmt:
Senden der Zufallsaufgabe an das Identitätsverifizierungselement,
Empfangen einer signierten Aufgabe von dem Identitätsverifizierungselement und
Senden der signierten Aufgabe an die verknüpfte Vorrichtung.

7. Verfahren nach Anspruch 6 ferner mit:
Verifizieren der signierten Aufgabe an der verknüpften Vorrichtung (106) unter Verwendung eines kryptografischen Schlüssels, der zuvor von der Chipkarte extrahiert worden ist, und
als Reaktion auf das erfolgreiche Verifizieren der signierten Aufgabe, Gewähren eines Zugriffs auf die verknüpfte Vorrichtung.

8. Verfahren nach einem der vorhergehenden Ansprüche, wobei das Empfangen des biometrischen Kandidaten eine Verifizierungsphase auslöst, wobei das Verfahren ferner in einer Anmeldephase, die vor der Verifizierungsphase auftritt, Folgendes aufweist:
Empfangen (512) eines biometrischen Anmeldekandidaten an der Vorrichtung (104) als Reaktion auf das Empfangen des biometrischen Anmeldekandidaten,
Erzeugen (514) eines kryptografischen Anmeldeschlüssels von dem biometrischen Anmeldekandidaten,
Empfangen (502) einer Zeichenfolge, die mit dem Identitätsverifizierungselement (102) verknüpft ist,
Verschlüsseln (524) der Zeichenfolge, wobei das Verschlüsseln den ersten kryptografischen Schlüssel einsetzt und in der verschlüsselten Zeichenfolge resultiert, und
Speichern der verschlüsselten Zeichenfolge.

9. Verfahren nach Anspruch 8, wobei das Entschlüsseln der zuvor gespeicherten, verschlüsselten Zeichenfolge ein Verifizieren, dass die Zeichenfolge erfolgreich entschlüsselt worden ist, aufweist.

10. Chipkartenleser (104), der mit einer Chipkarte (102) verknüpft ist, wobei der Chipkartenleser (104) keinen Zugriff auf eine biometrische Vorlage hat, bis sie von der Chipkarte (102) empfangen ist, mit:
einer Speicherkomponentenschnittstelle (322) zum Aufnehmen der Chipkarte (102) zur Kommunikation damit,
einem Speicher (314, 316) zum Speichern einer verschlüsselten Zeichenfolge, die mit der Chipkarte verknüpft ist, und von einem Computer ausführbaren Anweisungen,
einer biometrischen Eingabevorrichtung (325) und
einem Prozessor (310), der dazu ausgelegt ist, die von dem Computer ausführbaren Anweisungen auszuführen, um das Gerät (104) zu veranlassen, die Schritte des Verfahrens nach einem der Ansprüche 1 bis 9 umzusetzen.

11. Computerlesbares Medium (314, 316), das von einem Computer ausführbare Anweisungen beinhaltet, die, wenn sie von einem Prozessor (310) durchgeführt werden, den Prozessor veranlassen, die Schritte des Verfahrens nach einem der Ansprüche 1 bis 9 durchzuführen.

## Revendications

1. Procédé mis en oeuvre par ordinateur de manipulation d'un facteur d'une séquence d'authentification multi-facteur, ledit procédé comprenant :
la réception d'un candidat biométrique au niveau d'un dispositif associé à un élément de vérification d'identité (102), ledit dispositif n'ayant pas accès à des gabarits biométriques stockés sur l'élément de vérification d'identité (102) tant qu'ils n'ont pas été extraits dudit élément de vérification d'identité (102) ;
la génération d'une clé cryptographique à partir dudit candidat biométrique ;
le déchiffrement d'une séquence de caractères chiffrée stockée précédemment associée audit élément de vérification d'identité (102), où ledit déchiffrement emploie ladite clé cryptographique et aboutit à une séquence de caractères déchiffrée ;
la transmission de ladite séquence de caractères déchiffrée audit élément de vérification d'identité ;
la réception, en provenance dudit élément de vérification d'identité, d'une indication de vérification de séquence de caractères ;
la détermination, à partir de ladite indication, que ledit élément de vérification d'identité a vérifié avec succès ladite séquence de caractères déchiffrée ; et
en réponse à ladite détermination que ledit élément de vérification d'identité a vérifié avec succès ladite séquence de caractères déchiffrée, le fait de procéder à ladite séquence d'authentification multi-facteur en :
extrayant lesdits gabarits biométriques dudit élément de vérification d'identité ; et
déterminant que ledit candidat biométrique concorde avec un desdits gabarits biométriques.

2. Procédé selon la revendication 1, comprenant en outre :
en réponse à la détermination que ledit élément de vérification d'identité n'a pas vérifié ladite séquence de caractères déchiffrée, la transmission d'une indication que la vérification n'a pas réussi.

3. Procédé selon l'une quelconque des revendications précédentes, dans lequel ledit candidat biométrique comprend une empreinte digitale candidate.

4. Procédé selon l'une quelconque des revendications précédentes, dans lequel ledit élément de vérification d'identité comprend une carte à puce (102).

5. Procédé selon la revendication 4, dans lequel ladite séquence de caractères comprend un numéro d'identification personnel associé à ladite carte à puce.

6. Procédé selon la revendication 1, dans lequel ledit fait de procéder à ladite séquence d'authentification multi-facteur comprend en outre :
la réception d'un défi aléatoire en provenance d'un dispositif associé (106) ;
en réponse à ladite détermination que ledit candidat biométrique concorde avec un desdits gabarits biométriques :
la transmission dudit défi aléatoire audit élément de vérification d'identité ;
la réception d' un défi signé en provenance dudit élément de vérification d'identité ; et
la transmission dudit défi signé audit dispositif associé.

7. Procédé selon la revendication 6, comprenant en outre :
au niveau du dispositif associé (106), la vérification du défi signé en utilisant une clé cryptographique extraite précédemment de la carte à puce ; et
en réponse à la vérification avec succès du défi signé, l'octroi d'accès au dispositif associé.

8. Procédé selon l'une quelconque des revendications précédentes, dans lequel la réception du candidat biométrique déclenche une phase de vérification, le procédé comprenant en outre, dans une phase d'enrôlement se produisant avant la phase de vérification :
la réception (512) d'un candidat biométrique d'enrôlement au niveau du dispositif (104) en réponse à ladite réception dudit candidat biométrique d'enrôlement ;
la génération (514) d'une clé cryptographique d'enrôlement à partir dudit candidat biométrique d'enrôlement ;
la réception (502) d'une séquence de caractères associée audit élément de vérification d'identité (102) ;
le chiffrement (524) de ladite séquence de caractères, où ledit chiffrement emploie ladite première clé cryptographique et aboutit à la séquence de caractères chiffrée ; et
le stockage de ladite séquence de caractères chiffrée.

9. Procédé selon la revendication 8, dans lequel le déchiffrement de la séquence de caractères chiffrée stockée précédemment comprend la vérification que la séquence de caractères a été déchiffrée avec succès.

10. Lecteur de carte à puce (104) associé à une carte à puce (102), ledit lecteur de carte à puce (104) n'ayant pas accès à un gabarit biométrique tant qu' il n'a pas été reçu en provenance de ladite carte à puce (102) comprenant :
une interface de composant de stockage (322) pour recevoir ladite carte à puce (102) pour la communication avec celle-ci ;
une mémoire (314, 316) pour stocker une séquence de caractères chiffrée associée à ladite carte à puce et des instructions exécutables par ordinateur ;
un dispositif d'entrée biométrique (325) ; et
un processeur (310) adapté pour exécuter lesdites instructions exécutables par ordinateur pour amener ledit appareil (104) à mettre en oeuvre les étapes du procédé selon l'une quelconque des revendications 1 à 9.

11. Support lisible par ordinateur (314, 316) contenant des instructions exécutables par ordinateur qui, lorsqu'elles sont effectuées par un processeur (310), amènent ledit processeur à effectuer les étapes du procédé selon l'une quelconque des revendications 1 à 9.
